# EUROPEAN PATENT SPECIFICATION

(11) **EP 4 454 939 B1**
(45) Date of publication and mention of the grant of the patent: **19.11.2025**
(21) Application number: 23169351.6
(22) Date of filing: 24.04.2023
(51) Int. Cl.: B60N 2/00

(54) **METHOD OF FACILITATING OCCUPANT SAFETY IN AN AUTONOMOUS VEHICLE AND A VEHICLE OCCUPANT SAFETY SYSTEM**
VERFAHREN ZUR INSASSENSICHERHEIT IN EINEM AUTONOMEN FAHRZEUG UND FAHRZEUGINSASSENSICHERHEITSSYSTEM
PROCÉDÉ POUR FACILITER LA SÉCURITÉ DES OCCUPANTS D'UN VÉHICULE AUTONOME ET SYSTÈME DE SÉCURITÉ DES OCCUPANTS D'UN VÉHICULE

(43) Date of publication of application: 30.10.2024
(73) Proprietor: Autoliv Development AB, 447 83 Vårgårda (SE)
(72) Inventor: Jansson, Anders, 447 83 Vårgårda (SE)
(74) Representative: AWA Sweden AB

(56) References cited:
- EP-A1- 1 669 251
- US-A1- 2002 029 103

## Description

### Technical field

The present invention relates to a method of facilitating occupant safety in an autonomous vehicle, the use of such method and also a vehicle occupant safety system to be used in an autonomous vehicle.

### Technical background

There are numerous safety systems in vehicles to ensure that all passengers are seated and belted in a proper manner. The straightforward solution is the use of seat belts, and in many cases also the provision of child seats. A child seat may be a removable seat or a removable cushion. It may also be an integrated child seat that is foldable into an extended position to allow a child to be seated. There are also numerous notification systems provided that are directed to the drivers' attention. These notification systems are typically based on light signals or audio signals to notify the driver if a passenger is belted or not. Although the provision of these safety systems, it is ultimately in the end the drivers' discretion to take the final decision to drive or not based on the provided notification.

There is a trend towards the provision of autonomous vehicles for passenger transportation. The autonomous vehicle may as a non-limiting example be an autonomous private car or a public autonomous vehicle such as a taxi or a shuttle. These autonomous vehicles may offer the same safety systems in terms of belts and child seats, but since there is no physical driver, it is the passengers' discretion whether to use the provided safety systems or not. This especially applies to integrated child seats.

US2002/029103 A1 discloses a vehicular rear seat area monitoring system including at least one wave-receiving sensor arranged behind the front seat to receive waves from a space above the rear seat and a processor coupled to the sensor(s) for controlling another system in the vehicle based on the waves received by the sensor(s).

EP1669251 A1 discloses a safety system for a vehicle comprising a first acquisition unit for acquiring first information relating to a child seat placed on a seat of a vehicle, a second acquisition unit for acquiring second information relating to the child seat. The first and second acquisition units are of different types. The safety system further comprises a controller capable of evaluating first information and second information individually and a combination of first and second information for detecting misuse of the child seat and for generating a misuse signal indicative of the misuse.

There is hence a need for a method and a system to promote the use of provided safety systems in autonomous passenger vehicles, and especially safety systems that are directed to child safety.

### Summary of the invention

It is an object of the present invention to solve at least some of the problems mentioned above.

According to an aspect of the present invention, there is provided a method of facilitating occupant safety in an autonomous vehicle, the method comprising:
sensing, by using a first detector, presence of a person in the vehicle and generating a presence data;
evaluating the presence data to determine if the person present in the vehicle is a child;
sensing, by using a second detector, the status of an integrated child seat in the vehicle and generating a seat status data;
evaluating the seat status data to determine if the seat is activated; and
   in the event it is determined that the person present is a child and that the integrated child seat is in an activated state, generate a notification data for a vehicle operation system; wherein the notification data comprises any of:
   - data for preventing the vehicle from departing;
   - data for reducing the speed of the vehicle;
   - data for stopping the vehicle; and
   - data for contacting and informing a service center.

Accordingly, a method is provided that uses a first detector to detect if there is a person and this presence data is evaluated to determine if that person is a child or not. Also, a second detector determines the status of an integrated child seat to establish if the seat is activated. In the context of the present invention, the term "activated" should be understood as that the seat is set into an extended position and also locked in said extended position. If it is determined that there is a child present and the child seat is activated, a notification data is generated. This notification data can be used for additional decisions to be made, e.g., to allow the autonomous vehicle to start and depart.

Accordingly, by the method, it is promoted that the available integrated child seat is used, which is a safety measure not for the child as such, but also for other passengers in the vehicle in the event of an accident.

The first detector may comprise one or more sensors from a group consisting of an image sensor, a radar, a Lidar, a time-of-flight sensor, a pressure sensor and a weight sensor. The image sensor may be a camera and the presence data generated by the image sensor may be subjected to image processing to provide information of the size of the person, or an image recognition process to determine if the present person is a child or not. Correspondingly, data resulting from a radar, a Lidar or a time-of-flight sensor may be used as an indication of the size of the person. The presence data generated by the image sensor may be subjected to image processing to provide information of the size of the person or an image recognition process to determine if the present person is a child or not. The pressure sensor may by way of example be integrated in the seat surface of the integrated child seat or in a pivot of the seat structure. The weight sensor may by way of example be integrated in the seat surface of the integrated child seat, or in a pivot of the seat structure. If the pressure and/or weight is determined to be within a certain range, that information is indicative of the size and hence the age of the person.

The second detector may comprise one or more sensors from a group consisting of an image sensor, a Hall sensor, a switch, a pressure sensor, and a contact sensor. The image sensor may be a camera that generates information that may be used to detect the seat status. The one or more sensors from the group consisting of a Hall sensor, a switch, a pressure sensor, and a contact sensor may be used to give an indication of the actual structural setting of the integrated child seat i.e., if the seat is extended and also locked in said extended position. The one or more sensors may by way of example be used to detect if a pivot of a linkage arrangement forming part of the seat is set to a certain position, such as an end position.

The presence data may be evaluated by using image recognition, radar recognition or Lidar recognition. The image recognition may be used to determine if the present person is a child or not. Radar recognition or Lidar recognition may be used as an indication of the size of the person. The size of the person may be used as an indication that a child seat should be used.

The presence data may be evaluated by using artificial intelligence, AI.

The method may further comprise sensing, by using a third detector, if the child is seated and belted to the integrated child seat, and generating a belt status data. The third detector may by way of example be a Hall sensor. Using detectors for generating belt status data is well known in seat belt technology and is not further discussed.

The notification data comprises any of:
- data for informing the person in the vehicle by audio, text or light;
- data for preventing the vehicle from departing;
- data for reducing the speed of the vehicle;
- data for stopping the vehicle; and
- data for contacting and informing a service center.

Accordingly, the data may be used to notify one or more persons in the vehicle to thereby encourage them to react on the notification provided. This may by way of example be to belt the child or confirm that the situation is under control. Alternatively, the data may be used to control the departure, control the speed or even stop a running vehicle. In yet another example, the data may be used to contact and inform a service center, to allow a remote operator to interfere.

The presence data may be evaluated by the first detector or by an ECU (Electrical Control Unit). The seat status data may be evaluated by the second detector or by an ECU. The belt status data may be evaluated by the third detector or by an ECU. Two or more detectors may be connected to one and the same ECU. The connection may be a wired or a wireless connection. The ECU may be the same control unit that operates the vehicle as such. Alternatively, the one or more ECUs may be connected to the control unit that operates the vehicle.

According to another aspect, the invention refers to the use of the method according to any of claims 1-10 in an autonomous vehicle. The autonomous vehicle may as a non-limiting example be a private autonomous car or a public vehicle such as an autonomous taxi or shuttle.

According to yet another aspect, the invention refers to a vehicle occupant safety system to be used in an autonomous vehicle, the system comprising:
a first detector configured to sense presence of a person in the vehicle and to generate a presence data;
a second detector configured to detect if an integrated child seat in the vehicle is activated, and to generate a seat status data;
an ECU configured to communicate with the first and the second detectors and to determine if the presence data represents a child; and wherein
the ECU is configured to generate a notification signal for a vehicle operation system,
wherein notification data comprises any of:
   - data for preventing the vehicle from departing;
   - data for reducing the speed of the vehicle;
   - data for stopping the vehicle; and
   - data for contacting and informing a service center.

The same advantages and effects that have been thoroughly discussed above in the context of a method do equally apply to the system involving the corresponding structural features. Reference is made to the above to avoid undue repetition.

The system may further comprise a third detector configured to detect if the child is seated and belted to the integrated child seat, and to generate a belt status data, and wherein the ECU is configured to communicate with the third detector.

According to yet another aspect, the invention refers to a non-transitory computer readable storage medium having stored thereon instructions for implementing the method according to any of claims 1-9, when executed on a device having processing capabilities. The above-mentioned features of the method, when applicable, apply to this aspect as well. Reference is made to the above to avoid undue repetition.

According to still another aspect, the invention refers to a software comprising the steps of the method according to any of claims 1-9. The above-mentioned features of the method, when applicable, apply to this aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a system according to the invention.
Fig. 2 is an example of how the ECU may be embodied.
Fig. 3 is a flowchart illustrating a method of facilitating occupant safety in an autonomous vehicle, according to some embodiments of the present disclosure.

### Detailed description

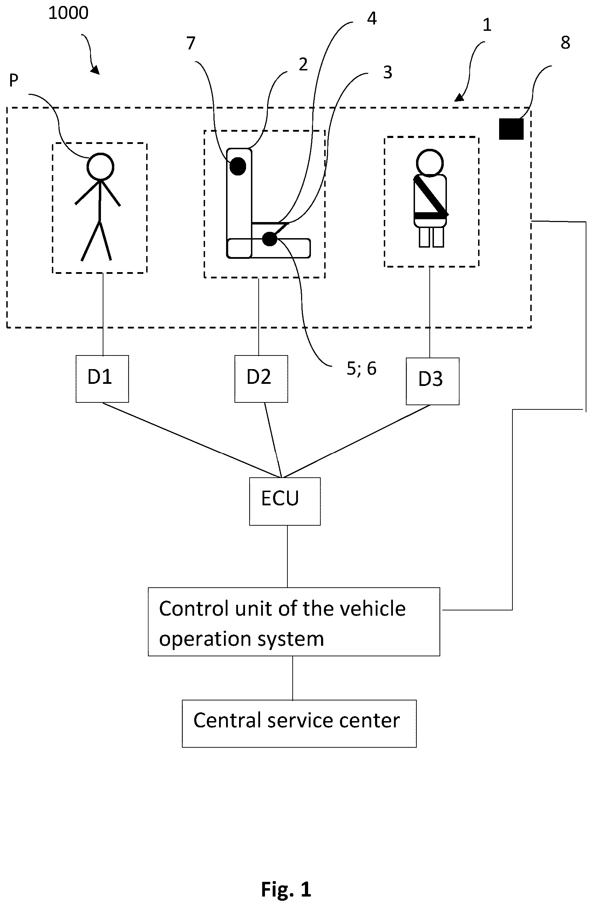

Starting with Fig. 1, a schematic overview of a safety system 1000 to be used in an autonomous vehicle 1 according to the invention is disclosed.

The vehicle 1 comprises at least one passenger seat 2 having an integrated child seat 3. The integrated child seat 3 is configured to be set between a folded, non-activated position and an extended, activated position in which it forms a seating surface 4 for a child. The integrated child seat 3 is schematically disclosed as being set into its activated position, i.e., its extended position. The child seat 3 comprises a highly schematically disclosed releasable locking mechanism 5 that is configured to maintain the child seat 3 in its extended, activated position when set to such position. The locking mechanism 5 is highly schematically disclosed as being arranged in a pivot 6 of the child seat 3. The skilled person realises that other positions are equally applicable.

The system 1000 comprises a first detector D1. The first detector D1 is configured to sense presence of a person P in the vehicle and to generate a presence data. The first detector D1 may comprise one or more sensors from a group consisting of an image sensor, a radar, a Lidar, a time-of-flight sensor, a pressure sensor and a weight sensor.

The image sensor may be a camera and the presence data generated by the image sensor may be subjected to image processing to provide information of the size of the person P, or be subjected to an image recognition process to determine if the present person P is a child or not. The presence data may even be subjected to a combination of image processing and image recognition.

Correspondingly, presence data resulting from a radar, a Lidar or a time-of-flight sensor may be evaluated by using image recognition, radar recognition or Lidar recognition. Radar recognition or Lidar recognition may be used as an indication of the size of the person P. If the size is determined to be within a certain range, that information is indicative of the size and hence the age of the person P. The size may be determined based on a two-dimensional shape or as a three-dimensional volume where the shape/volume is determined based on the presence data from the radar, Lidar and/or time-of flight sensor.

One or more image sensors and/or radar, Lidar or time-of-flight sensors may be arranged e.g., in the ceiling of the vehicle compartment or in any of its pillars, such as it's A-, B- or C-pillars.

One or more pressure sensors and/or weight sensors may by way of example be integrated in the seating surface 4 of the integrated child seat 3 or in a pivot 6 of the child seat 3. If the pressure and/or weight is determined to be within a certain range, that information is indicative of the size and hence the age of the person P.

The presence data may be evaluated by using artificial intelligence.

The system 1000 further comprises a second detector D2. The second detector D2 is configured to detect if the integrated child seat 3 in the vehicle is activated, and to generate a seat status data.

The second detector D2 may comprise one or more sensors from a group consisting of an image sensor, a Hall sensor, a switch, a pressure sensor, and a contact sensor. The image sensor may be a camera that generates information that may be used to detect the seat status. The one or more sensors from the group consisting of a Hall sensor, a switch, a pressure sensor, and a contact sensor may be used to give an indication of the actual structural setting of the child seat 3 i.e., if the seat is extended and also locked in said extended position. The one or more sensors may by way of example be used to detect if the pivot 6 of a linkage arrangement forming part of the child seat 3 is set to a certain position, such as an end position. The second detector D2 may by way of example be arranged in the pivot 6 and/or in the locking mechanism 5. The skilled person realises that the position may vary depending on the overall structural design of the child seat 3. This design may vary between different suppliers and brands.

The system 1000 further comprises an optional third detector D3. The third detector D3 is configured to detect if the child is seated and belted to the integrated child seat 3, and to generate a belt status data. The third detector D3 may by way of example be a Hall sensor. Using detectors for generating belt status data is well known in seat belt technology and is not further discussed. The third detector D3 may by way of example be arranged in the belt mechanism 7 of the passenger seat 2.

The disclosed system further comprises a common ECU (Electrical Control Unit). The ECU is configured to communicate with the first and the second detectors D1, D2, and also with the optional third detector D3. Thus, two or more detectors D1-D3 may be connected to one and the same ECU. The ECU is configured to determine if the presence data represents a child. Further, the ECU is configured to generate a notification signal for a control unit of a vehicle operation system.

The skilled person realises that each detector D1-D3 with remained functionality may be configured to communicate with its own ECU, and where the individual ECUs in turn are configured to generate a notification signal for a vehicle operation system

Further, the skilled person realises that the presence data may be evaluated by the first detector D1 as such or by the ECU, that the seat status data may be evaluated by the second detector D2 as such or by the ECU, and that the belt status data may be evaluated by the third detector D3 as such or by the ECU.

The connection and hence the communication between a detector D1-D3 and an ECU may be wired or wireless. This applies no matter the number of detectors and the number of ECUs.

In the event of a common ECU, this ECU may be the same control unit that operates the vehicle as such, i.e., a control unit of a vehicle operation system. In the event of the detectors D1-D3 are connected to individual ECUs, at least one of them may be the control unit of the vehicle operation system.

The notification data may in one embodiment comprise data for informing the person in the vehicle by audio, text or light. This kind of notification data may be presented to the person P in the vehicle compartment via a notification arrangement 8 comprising one or more of a speaker, a display or a lamp. Thus, one or more persons P in the vehicle may be notified to thereby encourage them to react on the notification provided. This may by way of example be to belt the child or to confirm that the situation is under control.

The notification data may in another embodiment comprise data for preventing the vehicle from departing. This type of notification data is preferably handled by the control unit of the vehicle operation system.

The notification data may in yet another embodiment comprise data for reducing the speed of the vehicle. This type of notification data is preferably handled by the vehicle control unit of the vehicle operation system.

The notification data may in another embodiment comprise data for stopping the vehicle. This type of notification data is preferably handled by the control unit of the vehicle operation system.

The notification data may in yet another embodiment comprise data for contacting and informing a central service center. The latter allows a remote operator to selectively interfere with the vehicle's operation or to communicate with the person P in the vehicle. The communication may be made via the notification arrangement 8.

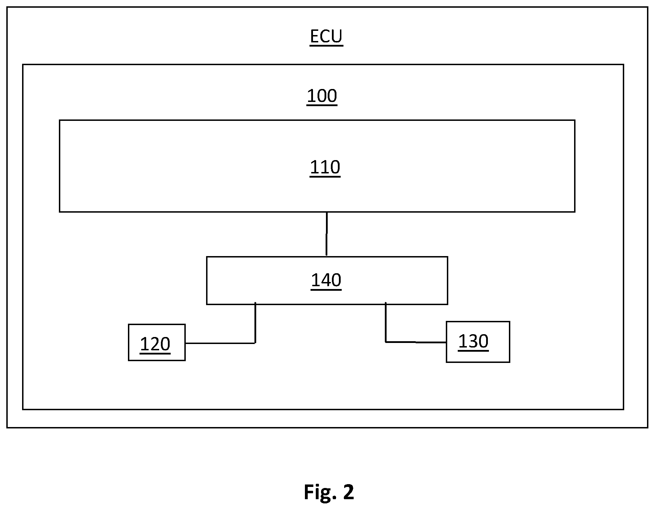

Now turning to Fig. 2, one example of the overall design of an ECU according to the invention is disclosed. The ECU comprises a circuitry 100. The circuitry 100 may comprise one or more of a memory 110, a processing unit 120, a transceiver 130, and a data bus 140. The processing unit 120 may comprise a central processing unit (CPU) and/or a graphical processing unit (GPU). The transceiver 130 may be configured to communicate with external devices such as one or more of the detectors D1-D3, see Fig. 1 or with the notification arrangement 8.

The detectors D1-D3 may be configured to communicate with the circuitry 100 via the data bus 140 and/or the transceiver 130. The transceiver 130 may be configured to communicate with servers, computer external peripherals (e.g., external storage), etc. The external devices may be local devices or remote devices. Non-limiting examples of such devices are the control unit of the vehicle operation system, a server at the central service center or a cloud server. The transceiver 130 may be configured to communicate with the external devices via an external network, e.g., a local-area network, the internet, etc.). The transceiver 130 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire. One or more of the memory 110, the processing unit 120 and the transceiver 130, may communicate via the data bus 140. The memory 110 may be a non-transitory computer-readable storage medium. The memory 110 may be a random-access memory. The memory 110 may be a non-volatile memory. The memory 110 may store program code portions corresponding to one or more functions. The functions may by way of example be to evaluate the presence data to determine if the person present in the vehicle is a child, to evaluate the seat status data to determine if the seat is activated, and/or to evaluate belt status data to determine if the child is belted or not.

The program code portions may be executable by the processing unit 120, which thereby performs the functions. It is to be understood that one or more functions of the circuitry 100 may be hardware implemented and/or implemented in a specific integrated circuit. For example, one or more functions may be implemented using field-programmable gate arrays (FPGAs). Put differently, one or more functions of the circuitry 100 may be implemented in hardware or software, or as a combination of the two.

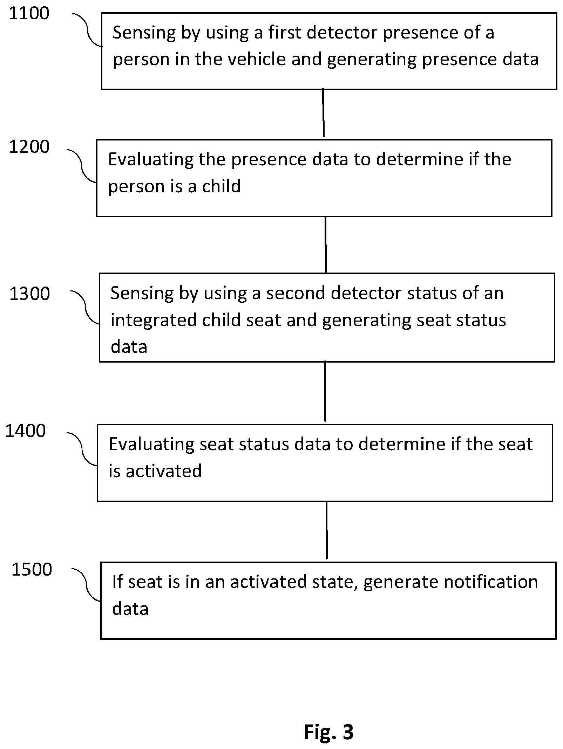

Now turning to Fig. 3, a flow chart is provided that illustrates one embodiment of a method of facilitating occupant safety in an autonomous vehicle. The autonomous vehicle may as a non-limiting example be a private autonomous car or a public vehicle such as an autonomous taxi or shuttle. The method comprises the following steps:
Sensing 1100, by using the first detector D1, presence of a person P in the vehicle 1 and generating a presence data.

Evaluating 1200 the presence data to determine if the person P present in the vehicle 1 is a child.

Sensing 1300, by using the second detector D2 the status of an integrated child seat 3 in the vehicle and generating a seat status data.

Evaluating 1400 the seat status data to determine if the integrated child seat 3 is activated.

In the event it is determined that the person P present is a child and that the integrated child seat 3 is in an activated state, a notification data for a vehicle operation system is generated 1500.

Accordingly, the method uses the first detector D1 to detect if there is a person P and this presence data is evaluated to determine if that person P is a child or not. Also, the second detector D2 determines the status of the integrated child seat 3 to establish if the seat is activated. In the context of the present invention, the term "activated" should be understood that that the seat is set into an extended position and also locked in said extended position. If it is determined that there is a child present and the child seat is activated, a notification data is generated. This notification data can be used for additional decisions, e.g. to communicate with the person, allowance of the autonomous vehicle to start and depart and also driving conditions, such as speed.

The method may be run before starting the vehicle. The method may also be run continuously during operation of the vehicle, i.e., as the vehicle is running.

The steps of the method may be performed in any order suitable.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure and the appended claims.

## Claims

1. Method of facilitating occupant safety in an autonomous vehicle, the method comprising:
sensing, by using a first detector (D1), presence of a person (P) in the vehicle (1) and generating a presence data;
evaluating the presence data to determine if the person (P) present in the vehicle (1) is a child;
sensing, by using a second detector (D2), the status of an integrated child seat (3) in the vehicle (1) and generating a seat status data;
evaluating the seat status data to determine if the seat (3) is activated; and
in the event it is determined that the person (P) present is a child and that the integrated child seat (3) is in an activated state, generate a notification data for a vehicle operation system,
**characterised in that** the notification data comprises any of:
- data for preventing the vehicle (1) from departing;
- data for reducing the speed of the vehicle (1);
- data for stopping the vehicle (1); and
- data for contacting and informing a service center.

2. The method according to claim 1, wherein the first detector (D1) comprises one or more sensors from a group consisting of an image sensor, a radar, a Lidar, a time-of-flight sensor, a pressure sensor and a weight sensor.

3. The method according to claim 1 or 2, wherein the second detector (D2) comprises one or more sensors from a group consisting of an image sensor, a Hall sensor, a switch, a pressure sensor, and a contact sensor.

4. The method according to any of the preceding claims, wherein presence data is evaluated by using image recognition, radar recognition and Lidar recognition.

5. The method according to any of claims 1-3, wherein the presence data is evaluated by using artificial intelligence.

6. The method according to any of the preceding claims, further comprising sensing, by using a third detector (D3), if the child is seated and belted to the integrated child seat, and generating a belt status data.

7. The method according to any of claims 1-6, wherein the presence data is evaluated by the first detector (D1) or by an ECU.

8. The method according to any of claims 1-6, wherein the seat status data is evaluated by the second detector (D2) or by an ECU.

9. The method according to any of claims 1-6, wherein the belt status data is evaluated by the third detector (D3) or by an ECU.

10. Use of the method according to any of claims 1-9 in an autonomous vehicle.

11. A vehicle occupant safety system (1000) to be used in an autonomous vehicle, the system comprising:
a first detector (D1) configured to sense presence of a person (P) in the vehicle (1) and to generate a presence data;
a second detector (D2) configured to detect if an integrated child seat (3) in the vehicle (1) is activated, and to generate a seat status data;
an ECU configured to communicate with the first and the second detectors (D1, D2) and to determine if the presence data represents a child; and wherein
the ECU is configured to generate a notification signal for a vehicle operation system,
**characterised in that** notification data comprises any of:
- data for preventing the vehicle (1) from departing;
- data for reducing the speed of the vehicle (1);
- data for stopping the vehicle (1); and
- data for contacting and informing a service center.

12. The system according to claim 11, further comprising a third detector (D3) configured to detect if the child is seated and belted to the integrated child seat (3), and generating a belt status data, and wherein the ECU is configured to communicate with the third detector (D3).

13. A non-transitory computer readable storage medium having stored thereon instructions for implementing the method according to any of claims 1-9, when executed on a device having processing capabilities.

14. A software comprising the steps of the method according to any of claims 1-9.

## Patentansprüche

1. Verfahren zum Ermöglichen der Insassensicherheit in einem autonomen Fahrzeug, wobei das Verfahren umfasst:
Erfassen der Anwesenheit einer Person (P) in dem Fahrzeug (1) durch einen ersten Detektor (D1) und Erzeugen von Anwesenheitsdaten;
Auswerten der Anwesenheitsdaten, um zu bestimmen, ob es sich bei der in dem Fahrzeug (1) anwesenden Person (P) um ein Kind handelt;
Erfassen des Status eines integrierten Kindersitzes (3) in dem Fahrzeug (1) durch einen zweiten Detektor (D2) und Generieren von Sitzstatusdaten;
Auswerten der Sitzstatusdaten, um zu bestimmen, ob der Sitz (3) aktiviert ist; und
falls bestimmt wird, dass es sich bei der anwesenden Person (P) um ein Kind handelt und der integrierte Kindersitz (3) in einem aktivierten Zustand ist, Generieren von Benachrichtigungsdaten für ein Fahrzeugbetriebssystem,
**dadurch gekennzeichnet, dass** die Benachrichtigungsdaten eines umfassen von:
- Daten zur Abfahrtsverhinderung des Fahrzeugs (1);
- Daten zur Reduzierung der Geschwindigkeit des Fahrzeugs (1);
- Daten zum Anhalten des Fahrzeugs (1); und
- Daten zur Kontaktaufnahme und Informieren eines Servicecenters.

2. Verfahren nach Anspruch 1, wobei der erste Detektor (D1) einen oder mehrere Sensoren aus einer Gruppe umfasst, die aus einem Bildsensor, einem Radar, einem Lidar, einem Time-of-Flight-Sensor, einem Drucksensor und einem Gewichtssensor besteht.

3. Verfahren nach Anspruch 1 oder 2, wobei der zweite Detektor (D2) einen oder mehrere Sensoren aus einer Gruppe umfasst, die aus einem Bildsensor, einem Hall-Sensor, einem Schalter, einem Drucksensor und einem Kontaktsensor besteht.

4. Verfahren nach einem der vorstehenden Ansprüche, wobei die Anwesenheitsdaten mittels Bilderkennung, Radarerkennung und Lidar-Erkennung ausgewertet werden.

5. Verfahren nach einem der Ansprüche 1 bis 3, wobei die Anwesenheitsdaten unter Verwendung von künstlicher Intelligenz ausgewertet werden.

6. Verfahren nach einem der vorstehenden Ansprüche, das ferner das Erfassen, ob das Kind in dem integrierten Kindersitz sitzt und angeschnallt ist, durch Verwendung eines dritten Detektors (D3) und das Generieren von Gurtstatusdaten umfasst.

7. Verfahren nach einem der Ansprüche 1 bis 6, wobei die Anwesenheitsdaten durch den ersten Detektor (D1) oder durch eine ECU ausgewertet werden.

8. Verfahren nach einem der Ansprüche 1 bis 6, wobei die Sitzstatusdaten durch den zweiten Detektor (D2) oder durch eine ECU ausgewertet werden.

9. Verfahren nach einem der Ansprüche 1 bis 6, wobei die Gurtstatusdaten von dem dritten Detektor (D3) oder von einer ECU ausgewertet werden.

10. Verwendung des Verfahrens nach einem der Ansprüche 1 bis 9 in einem autonomen Fahrzeug.

11. Fahrzeuginsassensicherheitssystem (1000) zur Verwendung in einem autonomen Fahrzeug, wobei das System umfasst:
einen ersten Detektor (D1), der konfiguriert ist, um die Anwesenheit einer Person (P) in dem Fahrzeug (1) zu erfassen und Anwesenheitsdaten zu generieren;
einen zweiten Detektor (D2), der konfiguriert ist, um zu erkennen, ob ein integrierter Kindersitz (3) in dem Fahrzeug (1) aktiviert ist, und Sitzstatusdaten zu generieren;
eine ECU, die konfiguriert ist, um mit dem ersten und dem zweiten Detektor (D1, D2) zu kommunizieren und zu bestimmen, ob die Anwesenheitsdaten für ein Kind stehen; und wobei
die ECU konfiguriert ist, um ein Benachrichtigungssignal für ein Fahrzeugbetriebssystem zu generieren,
**dadurch gekennzeichnet, dass** Benachrichtigungsdaten eines umfassen von:
- Daten zur Abfahrtsverhinderung des Fahrzeugs (1);
- Daten zur Reduzierung der Geschwindigkeit des Fahrzeugs (1);
- Daten zum Anhalten des Fahrzeugs (1); und
- Daten zur Kontaktaufnahme und Informieren eines Servicecenters.

12. System nach Anspruch 11, das ferner einen dritten Detektor (D3) umfasst, der konfiguriert ist, um zu erkennen, ob das Kind in dem integrierten Kindersitz (3) sitzt und darin angeschnallt ist, und der Gurtstatusdaten generiert, und wobei die ECU konfiguriert ist, um mit dem dritten Detektor (D3) zu kommunizieren.

13. Nichtflüchtiges, computerlesbares Speichermedium, auf dem Anweisungen zum Implementieren des Verfahrens nach einem der Ansprüche 1 bis 9 gespeichert sind, wenn es auf einer Vorrichtung mit Verarbeitungsfunktionen ausgeführt wird.

14. Software, die die Schritte des Verfahrens nach einem der Ansprüche 1 bis 9 umfasst.

## Revendications

1. Procédé pour faciliter la sécurité des occupants d'un véhicule autonome, le procédé comprenant :
la capture, à l'aide d'un premier détecteur (D1), de la présence d'une personne (P) dans le véhicule (1) et la génération de données de présence ;
l'évaluation des données de présence pour déterminer si la personne (P) présente dans le véhicule (1) est un enfant ;
la capture, à l'aide d'un deuxième détecteur (D2), de l'état d'un siège d'enfant intégré (3) dans le véhicule (1) et la génération de données d'état de siège ;
l'évaluation des données d'état de siège pour déterminer si le siège (3) est activé ; et
dans le cas où il est déterminé que la personne (P) présente est un enfant et que le siège enfant intégré (3) est dans un état activé, la génération de données de notification pour un système d'exploitation de véhicule,
**caractérisé en ce que** les données de notification comprennent l'un quelconque parmi :
- des données permettant d'empêcher le véhicule (1) de partir ;
- des données permettant de réduire la vitesse du véhicule (1) ;
- des données permettant d'arrêter le véhicule (1) ; et
- des données permettant de contacter et d'informer un centre de service.

2. Procédé selon la revendication 1, dans lequel le premier détecteur (D1) comprend un ou plusieurs capteurs appartenant à un groupe constitué d'un capteur d'image, d'un radar, d'un Lidar, d'un capteur de temps de vol, d'un capteur de pression et d'un capteur de poids.

3. Procédé selon la revendication 1 ou 2, dans lequel le deuxième détecteur (D2) comprend un ou plusieurs capteurs appartenant à un groupe constitué d'un capteur d'image, d'un capteur à effet Hall, d'un interrupteur, d'un capteur de pression et d'un capteur de contact.

4. Procédé selon l'une quelconque des revendications précédentes, dans lequel des données de présence sont évaluées à l'aide d'un reconnaissance d'images, d'une reconnaissance radar et d'une reconnaissance Lidar.

5. Procédé selon l'une quelconque des revendications 1 à 3, dans lequel les données de présence sont évaluées à l'aide d'une intelligence artificielle.

6. Procédé selon l'une quelconque des revendications précédentes, comprenant en outre la capture, à l'aide d'un troisième détecteur (D3), établissant si l'enfant est assis et attaché avec une ceinture de sécurité au siège d'enfant intégré, et la génération d'une donnée d'état de ceinture.

7. Procédé selon l'une quelconque des revendications 1 à 6, dans lequel les données de présence sont évaluées par le premier détecteur (D1) ou par une unité de commande électronique (ECU).

8. Procédé selon l'une quelconque des revendications 1 à 6, dans lequel les données d'état de siège sont évaluées par le deuxième détecteur (D2) ou par une ECU.

9. Procédé selon l'une quelconque des revendications 1 à 6, dans lequel les données d'état de ceinture sont évaluées par le troisième détecteur (D3) ou par une ECU.

10. Utilisation du procédé selon l'une quelconque des revendications 1 à 9 dans un véhicule autonome.

11. Système de sécurité pour les occupants d'un véhicule (1000) destiné à être utilisé dans un véhicule autonome, le système comprenant :
un premier détecteur (D1) configuré pour capturer la présence d'une personne (P) dans le véhicule (1) et pour générer des données de présence ;
un deuxième détecteur (D2) configuré pour détecter si un siège enfant intégré (3) dans le véhicule (1) est activé, et pour générer des données d'état de siège ;
une ECU configurée pour communiquer avec le premier et le deuxième détecteur (D1, D2) et pour déterminer si les données de présence représentent un enfant ; et dans lequel
l'ECU est configurée pour générer un signal de notification pour un système d'exploitation de véhicule,
**caractérisé en ce que** les données de notification comprennent l'un quelconque parmi :
- des données permettant d'empêcher le véhicule (1) de partir ;
- des données permettant de réduire la vitesse du véhicule (1) ;
- des données permettant d'arrêter le véhicule (1) ; et
- des données permettant de contacter et d'informer un centre de service.

12. Système selon la revendication 11, comprenant en outre un troisième détecteur (D3) configuré pour détecter si l'enfant est assis et attaché avec une ceinture de sécurité au siège enfant intégré (3), et générant des données d'état de ceinture, et dans lequel l'ECU est configurée pour communiquer avec le troisième détecteur (D3).

13. Support de stockage non transitoire lisible par ordinateur sur lequel sont stockées des instructions pour la mise en œuvre du procédé selon l'une quelconque des revendications 1 à 9, lorsqu'elles sont exécutées sur un dispositif doté de capacités de traitement.

14. Logiciel comprenant les étapes du procédé selon l'une quelconque des revendications 1 à 9.
